Europäisches Patentamt

European Patent Office

Office européen des brevets

(11) Publication number: **0 635 529 A1**

# EUROPEAN PATENT APPLICATION

(21) Application number: **93305729.1**

(22) Date of filing: **21.07.93**

(51) Int. Cl.6: **C08G 18/40**, C08G 18/76, C08L 75/04

(43) Date of publication of application:
**25.01.95 Bulletin 95/04**

(84) Designated Contracting States:
**DE FR GB IT**

(71) Applicant: **MITSUBOSHI BELTING LTD.**
**No. 1-21, 4-Chome, Hamazoe-dori**
**Nagata-ku**
**Kobe City**
**Hyogo, pref. (JP)**

(72) Inventor: **Miyawaki, Tadashi**
**No. 47 Mezon-shoho 201, 2-chome,**
**Asahimachi**
**Iwakura-City,**
**Aichi (JP)**
Inventor: **Nuka, Isamu**
**No. 37-2, 3-chome,**
**Momogaoka**
**Komaki-City,**
**Aichi (JP)**

(74) Representative: **Bond, Bentley George et al**
**Haseltine Lake & Co.**
**28 Southampton Buildings**
**Chancery Lane**
**London WC2A 1AT (GB)**

(54) **Composition for vibration damping material, method for its preparation and vibration damping moldings.**

(57) A composition suitable for use in making vibration damping material includes an alicyclic resin, an isocyanate reactive component and an isocyanate. The vibration damping material can be molded into a desired, complex shape or can be used in a vibration damping member that includes a layer of the vibration damping material and at least one steel sheet. The vibration damping material can include a filler by applying the filler to a cavity surface prior to introducing the composition into the cavity. The isocyanate index can be shifted from 100 to achieve improved hot fusing ability.

EP 0 635 529 A1

## TECHNICAL FIELD

This invention relates generally to a composition to make vibration damping material for use in vibration damping moldings, vibration damping members and to a method of making the vibration damping material. More specifically, this invention relates to a composition for making a polyurethane vibration damping material whose molecular chains can be varied to achieve the desired vibration damping.

## BACKGROUND OF THE INVENTION

Equipment such as domestic appliances, (e.g., washing machines, dryers, refrigerators, air conditioners, fans and the like), vehicle bodies, chassis of equipment, (e.g., copiers and the like), vibrate due to moving parts (e.g., motors, fans, moving carriages and the like) or external forces (e.g., the road over which a vehicle is driven) exerted on the equipment. The vibration may cause excessive wear on the equipment, create undesirable noises and shorten the life of the equipment.

A viscoelastic layer of vibration damping material having a high modulus of elasticity is used to lessen vibration and the associate problems. The vibration damping material can be molded into shape as by injection or protrusion molding or a sheet can be bonded to a steel sheet to make a vibration damping member.

The vibration damping material has long molecular chains that are tangled with each other. When a force is applied to the molecular chains so as to move these chains, energy is consumed until the stress caused by the force distorts the chains. A vibration damping effect is obtained by the chains consuming this energy. To increase the damping capability, it is required to effectively design the molecular chains taking into account the molecular weight, molecular structure of a monomer starting material, the degree and type of branching of the molecule, the cross-linking form of the molecular networks, the cross-linking density, the form of copolymerization, the morphology/microstructure, (e.g., crystalline or amorphous), and the like.

Conventionally utilized vibration damping materials having long chain molecules, such as polyisobutylene rubber, polyvinyl chloride, polynorbomene rubber, ethylene-propylene diene terpolymer (EPDM), 1,2-polybutadiene rubber, natural rubber (NR), styrene-butadiene rubber (SBR) and dicyclopentadiene resin, are usually produced prior to being incorporated into the vibration damping material. Therefore, it is difficult to design the molecular chain to increase vibration damping capability.

In most conventional epoxy and polyurethane vibration damping materials, a large amount of inorganic fillers are added to increase the dynamic modulus of elasticity so that the vibration damping capability is increased. This large filler amount makes it difficult to carry out liquid reaction molding using a method such as reaction injection molding (RIM). Some inorganic fillers can be used in reinforced RIM (RRIM) but it is still difficult to react the components of the vibration damping materials at a level of about 20 to about 200 weight percent inorganic fillers. Also, flake-shaped filler cannot pass through nozzles used in RIM and RRIM making molding with these fillers almost impossible.

A vibration damping material can be manufactured by kneading raw materials, e.g., asphalt (a rubber-like viscoelastic substance), polymerized plastics, the aforementioned rubbers and the like with the filler using a Banbury mixer and then calendaring the kneaded product into the form of a sheet or molding it into shape. The raw materials are already solid at room temperature. The raw material being solid at room temperature and the use of the large amount of filler result in injection and protrusion molding process limitations. Also, a lot of energy in the form of heat and pressure is required for molding.

Asphalt is naturally occurring and it is difficult to freely design the molecular chain.

An epoxy resin vibration damping material is manufactured by mixing and reacting a liquid oligomer having an epoxy group and a liquid polyamine to form a solid. A freely shaped molding can be obtained by pouring the liquid mixture into a mold. If a filler in an amount effective to improve the damping capability is mixed with the liquids, the viscosity increase prevents adequate mixing. If mixing is inadequate the damping capability is reduced. The epoxy resin type molding typically has a lower capability of damping vibration than a molding made from the above-described asphalt-based damping material due to the inability to use an effective amount of filler. Also, the ring-opening reaction of an epoxy group with the amine is a slow or incomplete reaction that is less likely to occur than a polyaddition reaction of a polyurethane. Designing the molecular chain produced from the epoxy resin is not as easy as designing the chain produced by the polyaddition reaction between the isocyanate and the polyol and/or amine.

Some conventional vibration damping materials are health risks. Asphalt may cause acne or keratoderma upon repeated exposure and can cause carcinoma of the skin and lungs. The epoxy is carcinogenic and may cause allergenic dermatitis, allergy of the respiratory organs, corneal conjunctivitis and bronchial asthma. The amines, especially aromatic amines, are highly carcinogenic.

Many of the conventional materials are obtained by addition polymerization of vinyl-based monomers but the molecular chain cannot be freely adjusted. Also, these monomers exhibit compatibility and reaction difficulties thus limiting the blending between monomers and their polymerization.

Conventional polyurethane vibration damping materials use polypropylene glycol, polyethylene glycol and polyester as the polyol reactant that is reacted with the isocyanate. These polyurethanes are usually soft. It is presently theorized that these polyol reactants contribute to the poor effectiveness of the polyurethane vibration damping material because their molecular chain has a low rotation barrier energy and relatively small side chains. Therefore, conversion of deformation stress to thermal energy is less likely to occur. Attempts have been made to increase the hardness of the polyurethane by increasing the hydroxyl (OH) value of the polyol reactants to densify the molecular network. This increase in hardness results in the micro-Brown motion between molecule segments being less likely to occur and the dynamic modulus of elasticity (E') being increased but tan $\delta$ being reduced which results in no improvement in vibration damping capability. That is, the conventional soft polyurethane has a dynamic modulus of elasticity that is too low and the conventional hard polyurethane has a tan $\delta$ that is too low. Thus, the conventional polyurethanes are not suitable, especially for the non-restriction type vibration damping member.

The method of initially reacting the polyol reactant and isocyanate at an isocyanate index of about 100 or in the range of about 80 to 120 is called a one-shot process. If the isocyanate index is not at about 100 the polyurethane will contain unreacted polyol reactant or isocyanate in an amount that can adversely affect the physical property of the polyurethane or result in a polyurethane that is sticky. Polyurethanes have been intended to be used as elastic materials such as elastomers and foams.

The method of first reacting a polyol reactant and isocyanate at an isocyanate index shifted away from 100 is called a prepolymer process because a prepolymer is produced. The prepolymer is subsequently reacted with either a polyol reactant or isocyanate at an isocyanate index of about 100 or in the range of about 80 to 120 to produce the polyurethane.

If the isocyanate index is shifted from 100, the hardness of the polyurethane and its vibration damping capacity are reduced. The hardness can be maintained by mixing an inorganic filler with the polyol reactant and isocyanate. Thus, improved vibration damping capability is achieved without setting the isocyanate index to 100 to achieve the improvement. However, the above-discussed problems associated with the filler arise.

Vibration damping members are divided into restriction type and non-restriction type members. The restriction type member is arranged such that the viscoelastic sheet of vibration damping material is interposed between two layers of vibration damping steel sheets. The non-restriction type member has vibration damping material bonded to one side of a vibration damping steel sheet. With both types, a sheet of vibration damping material contacts a surface of the equipment.

The restriction type member is superior to the non-restriction type member in its capability of damping vibration. The non-restriction type member has better formability than the restriction type member. A typical restriction type member is difficult to weld and has limitations in formability because the relatively soft viscoelastic damping material between the two sheets makes smooth pressing of the member difficult as compared to usual steel sheets. The restriction type member generally can achieve a combined loss factor not smaller than 0.5 when interposed between two 0.8 millimeter (mm) thick steel sheets so that it has good vibration damping capability.

The non-restriction type member can be produced by bonding the vibration damping material to a preformed and assembled surface which increases its uses. However, the vibration damping capabilities are not as good as compared to a restriction type member and generally a combined loss factor less than 0.5 when bonded to a 0.8 mm thick steel sheet is achieved.

It is presently theorised that the reason satisfactory vibration damping capabilities have not been previously obtained with the non-restriction type member is because the damping materials have primarily been based on blending at least one polymer and a solid inorganic filler.

Vibration damping in automobiles can be achieved by placing sheet-form vibration damping material on an irregular floor of the automobile body. The vibration damping material is fused to and made to conform to the shape of the floor in a paint drying furnace at a temperature of about 100° to 150° C. This fusing and conforming process is called hot fusing. The vibration damping material used in hot fusing is usually an asphalt or epoxy vibration damping material which has inferior vibration damping capability as compared to the conventional restriction type vibration damping member. The temperature at which the asphalt or epoxy vibration damping materials hot fuse cannot be freely changed.

The industry desires a composition for a polyurethane vibration damping material, moldings made from the composition that have imbedded therein a filler, vibration damping members that include the composition and polyurethane vibration damping material that can be used in a hot fusing process that overcome at least one of the aforementioned shortcomings.

## SUMMARY OF THE INVENTION

The present invention comprehends a composition suitable for use in making a polyurethane vibration damping material, a method of making filler-containing moldings using the composition, vibration damping members made using the composition and a polyurethane vibration damping material that can be used in a hot fusing process. The composition includes an alicyclic resin, an isocyanate reactive component and an isocyanate.

The composition does not pose the health risks associated with conventional vibration damping materials. The polyurethane is hardened not by increasing the density of the molecular chain as is taught by the prior art, but by utilizing the rigidity of molecular main chains of the alicyclic resin and isocyanate reactive component, preferably the alicyclic resin. Therefore, the vibration energy is more likely to convert to thermal energy through the micro-Brown motion between segments of the molecular chain to increase vibration damping capability.

The use of a polyurethane permits freer molecular chain design as compared to other polymers. The polyurethane is obtained by a polyaddition reaction between the alicyclic resin, the isocyanate reactive component and the isocyanate. These alicyclic resins, isocyanate reactive components and isocyanates are commercially available in a wide range of molecular structures having various molecular weights, branching forms, degrees of branching and the like to enable tailoring of the molecular chain of the polyurethane for the end use. The molecular weight and structure including the number of functional groups of the alicyclic resin and isocyanate reactive component can be easily adjusted due to their ease in reaction and polymerization characteristics to tailor the molecular chain.

The method produces a vibration damping material including a filler without requiring that the composition and filler be mixed prior to introduction into the mold. To achieve this, a mold cavity has filler applied thereto prior to introduction of the composition. Preferably, the filler is adhered to the cavity surface. Thus, the filler does not have to pass through a nozzle of a molding machine and the aforementioned processing shortcomings of using a filler are avoided. Although the method of applying the filler to a mold cavity surface is disclosed in Japanese Patent Application No. 3-274792, the application does not disclose using the present composition.

By varying the alicyclic resin, isocyanate reactive component and isocyanate, polyurethane vibration damping materials can be produced that have various damping capabilities. A polyurethane can be produced for damping vibration which has both a high vibration damping capability and a high hot fusing ability. The combination of high vibration damping capability and high hot fusing ability is obtained by shifting the isocyanate index from 100.

The range of the isocyanate shift from 100 depends upon the molecular structure and composition of the alicyclic resin, the isocyanate reactive component and the isocyanate utilized and the desired physical properties of the polyurethane. The shift range is a result of the statistical molecular weight distribution of the alicyclic resin, the isocyanate reactive component and the isocyanate. If the molecular weight distribution is narrow the shift range within which elasticity is obtained is also narrow.

Numerous other advantages and features of the present invention will become readily apparent from the following detailed description of the preferred embodiments and the appended claims.

## BRIEF DESCRIPTION OF THE DRAWINGS

FIGURE 1 is a cross-sectional view of a mold used in EXAMPLE 1 explained in the Detailed Description herein.

FIGURE 2 is a perspective view of a polyurethane molding obtained by using the mold of FIGURE 1.

FIGURE 3 illustrates a mold having filler on a surface for making the polyurethane molding of EXAMPLE 2 herein.

FIGURE 4 illustrates a mold having filler on a surface for making the polyurethane molding of EXAMPLE 3 herein.

FIGURE 5 is a prospective view of the polyurethane molding containing filler, the molding being obtained by the method of EXAMPLE 3 herein.

FIGURE 6 is a graph illustrating the relationship between the loss factor and temperature for various polyurethane moldings made according to the Examples herein and for other materials made in accordance with the Comparative Examples herein.

4

FIGURE 7 is a cross-sectional view of a mold used in EXAMPLE 5 herein.

FIGURE 8 is a perspective view of a polyurethane molding for damping vibration obtained by using the mold shown in FIGURE 7 herein.

FIGURE 9 is a perspective view of a sheet-form polyurethane molding for damping vibration to be applied onto and shaped in conformity with a steel sheet with irregularities.

FIGURES 10, 11 and 12 are graphs showing the relationship between the combined loss factor for a vibration damping member and temperature of various polyurethane moldings for damping vibration according to Examples of the present invention and Comparative Examples as described herein.

**DETAILED DESCRIPTION OF THE PREFERRED EMBODIMENTS**

Although this invention is susceptible to embodiment in many different forms, there are shown in the drawings and will be described in detail, presently preferred embodiments of the invention. It should be understood, however, that the present disclosure is to be considered as an exemplification of the principles of this invention and is not intended to limit the invention to the embodiments illustrated.

The present invention is directed to a composition suitable for use in manufacturing a polyurethane vibration damping material, a method of making polyurethane moldings using the composition and a filler, vibration damping members that utilize the composition and a polyurethane vibration damping material suitable for use in a hot fusing process.

The composition includes an alicyclic resin, an isocyanate reactive component and an isocyanate wherein polyurethanes made therefrom are solids at room temperature and can exhibit semi-molten resin characteristics that result in improved hot fusing. The composition also includes an effective amount of catalyst. Preferably, a solid filler is used in the composition.

The term "isocyanate reactive component", as used herein in its various grammatical forms, identifies a chemical having at least one group that can react with the NCO group of the isocyanate.

The term "semi-molten resin characteristic", as used in its various grammatical forms, means that when a sheet of polyurethane is placed on a horizontal steel sheet having a 60 millimeter (mm) diameter hole at a temperature of 150°C. for a time period of 30 minutes, a drop not smaller than 10 mm in length is produced but no dripping occurs.

The alicyclic resin preferably has double bonds. The alicyclic resin can be obtained from a monomer that is a fraction of a petroleum product containing 5 to 9 carbon atoms and which has a ring-shaped molecular structure and double bonds for polymerization. It is presently theorized that the increased rotation barrier energy due to the (1) chair-shaped ring and (2) side chains that extend from two carbon atoms to also form a ring-shaped side chain results in the alicyclic resin being less likely to deform and more likely to convert the deformation energy into thermal energy thus providing a high vibration damping capability. In contrast, other polymers such as polyethylene and polyacrylonitrile only have a side chain extending from one carbon atom. The vibration damping capability is usually maximized at near the glass transition temperature of the polyurethane. This temperature can be adjusted by changing the ratio of alicyclic resin to isocyanate reactive component.

Preferably, the alicyclic resin has a softening point at about 100°C. so that it can be melted and mixed into the isocyanate reactive component. Compatibility of the alicyclic resin and the isocyanate reactive component is enhanced by the presence of a polar group, e.g., carbonyl group, OH- group, $NH_2$- group and NH- group on the alicyclic resin molecule.

Preferably, the alicyclic resin is a telecheric polymer having at least one OH-, $NH_2$- or NH- group which contributes to the further avoidance of the reduction in reactivity.

Representative alicyclic resins include dicyclopentadiene resin, coumarone-indene resin, rosin modified resin, polyterpene resin, alicyclic water-added petroleum resins and the like. The OH-, $NH_2$- and NH- groups are available to react with the isocyanate group but are not required when an isocyanate reactive component is present.

The isocyanate reactive component preferably has two functional groups which reduces the molecular weight and lowers the viscosity of the alicyclic resin and isocyanate reactive component mixture to permit the use of an alicyclic resin having a high viscosity. This also makes the molecular chains more intertwined which increases vibration damping capability.

Preferably, the isocyanate reactive component is a liquid in the temperature range of about 20° to about 100° C.

Representative isocyanate reactive components include polyols (e.g., polyoxyalkylene glycols having two to about six carbon atoms in the alkyl group, alkylene glycols wherein the alkyl group contains about two to about six carbon atoms, diols containing two to about six carbon atoms and the like), polyesters, primary and secondary amines. The polyoxyalkylene glycols are preferred.

Representative polyesters include polyethylene-adipate, polybutylene-adipate, polyethylene-butylene-adipate, polyethylene-diethylene-adipate and the like.

Representative amines include amine-capped-polyether-polyols that are commercially available and are conventionally utilized in polyurea RIM technology

Representative polyoxyalkylene glycols include polyethylene glycol, polypropylene glycol, copolymers thereof and the like. Reactivity is increased if the polyoxyalkylene glycol has the preferred primary OH- end group.

The use of a polyol having a primary OH- group at the ends of the molecule, and an aromatic isocyanate with the alicyclic resin result in a reactivity that is far faster than other vibration damping material. The polyurethane molding is solidified within several minutes at room temperature and at normal pressure.

Preferably, the isocyanate has two or more functional isocyanate groups per molecule. Most preferably, the isocyanate has a large number of isocyanate groups to obtain a polyurethane having the desired molecular weight and molecular chain length because the isocyanate reactive component has a reduced molecular weight. For increased reactivity, the isocyanate is preferably an aromatic isocyanate. In uses where color changes must be avoided, the isocyanate is preferably an aliphatic isocyanate.

Representative isocyanates include diphenyl methane diisocyanate toluene diisocyanate, p-phenylene diisocyanate, diahisidine diisocyanate, 1,5 naphthalene diisocyanate, dimethyl triphenyl methane tetraisocyanate, triphenyl methane triisocyanate, polyphenylene polymethyl isocyanate and the like.

Preferred isocyanates are polyphenylene diisocyanate dimethyl triphenyl methane tetraisocyanate, triphenyl methane triisocyanate and the like.

The catalyst is conventional and is used to promote the addition reaction.

Representative catalysts are tertiary amines, organic tin compounds and the like.

Representative tertiary amines include triethylene diamines, triethylamine, tetramethylethylene diamine, dimethylethanol amine and the like.

Polyurethane moldings for damping vibrations can be made by conventional reaction injection and open pouring molding processes using the composition and an optional filler. The moldings can have a complex shape. In a method of molding the polyurethane in a mold that defines a cavity having a cavity surface, the filler is not mixed with the composition prior to introduction into the mold cavity. Rather, the filler is applied to the surface prior to introduction of the composition. Preferably, the filler is fixed in place such that movement of the filler is minimized when the composition is introduced into the cavity. By applying the filler to the surface it is possible to increase the dynamic modulus of elasticity (E') using a large amount of filler such as that achieved in a conventional sheet molding process, but which are unachievable in a conventional polyurethane molding process. Furthermore, the shortcomings of the sheet molding process are avoided.

The filler can be adhered to the surface using a film having an adhesive layer to which the filler is applied. Alternatively, irregular patterns that are on the same order as the grain size of the filler can be made on the surface.

The filler can be applied to a cavity surface that has curves by providing in the surface holes therethrough that are in communication to a vacuum source. A sheet having an adhesive layer can be held in place using the reduced pressure with the adhesive layer being exposed to receive filler. Representative materials from which the sheet can be made include thermoplastics, e.g., polyethylene, and thermosets, e.g., polyamides and polyesters.

The film having an adhesive layer is the preferred method of fixing the filler to the surface.

Representative fillers include flake-like substances, e.g., mica, glass flakes, graphite, talc, clay and the like, small granules, e.g., glass, glass fibers, carbon black, silica, alumina, iron, lead, pulverized thermoset resins and the like and powdery substances, e.g., calcium carbonate, carbon black, silica, glass powder and the like. You will note that the method provides for the use of thermoset resins that conventionally are not reusable.

Because the filler does not pass through molding machine nozzles that can be clogged, there is no need for the filler to be a powder. In fact, the powder fillers are the least preferred fillers because it is difficult for the composition to penetrate between individual powders on the surface. For example, granulated calcium carbonate having a grain size of several millimeters is preferred over powdered calcium carbonate. Furthermore, grain sizes of fillers that could not be used in the past, e.g., mica having grains that are several millimeters in size, because they could not be used in conventional molding machines are suitable for use herein.

Optionally, a siloxane compound can be utilized to improve the mixability of the isocyanate reactive component and the isocyanate.

A representative siloxane is a commercially available dimethyl polysiloxane compound.

Non-restriction and restriction vibration damping members can be produced by conventionally adhering a sheet of the polyurethane vibration damping material to 1 or 2, respectively, metal sheets.

The ability of the polyurethane vibration damping material to be hot fused can be improved by shifting the isocyanate index from 100 to give it semi-molten resin characteristics. The isocyanate index to obtain semi-molten characteristics is dependent on the composition. In the hot fusing process, a flat sheet of polyurethane vibration damping material is placed on a surface, such as the compartment floor of an automobile, that is irregular. The damping material is hot fused to the surface at a temperature higher than room temperature, preferably in a paint drying furnace that is at a temperature of about 100° to about 200°C., and by gravity. The vibration damping material must become sufficiently flexible within this temperature range for gravity to effect shaping. If the vibration damping material becomes too flexible it can cause fluidization which results in dripping of the damping material through holes or drifting of the damping material from proper positioning, both of which are undesirable.

The term "isocyanate index", as used in its various grammatical forms, is defined by the following FORMULA:

FORMULA 1: Isocyanate index = [(actual isocyanate formula weight/stoichiometric isocyanate formula weight)] X 100.

Where:

stoichiometric isocyanate formula weight = [(isocyanate equivalent)/(polyol equivalent)] x (polyol equivalent);

isocyanate equivalent = [42/(NCO%)] x 100;
polyol equivalent = [56,100/(OH-value)] x 100;
NCO% = nitrogen-carbon-oxygen percent; and
OH value = hydroxyl value.

The present polyurethane can be used in a hot fusing application, such as hot fusing a sheet of polyurethane to a compartment floor of an automobile, because the polymerization reaction is adjusted by shifting the isocyanate index, proper selection of the isocyanate reactive component and isocyanate and the use of the inorganic filler. Preferably, the isocyanate index is in a range of about 54 to about 55, when other compositions are determined as in EXAMPLES 5 to 7. This range varies widely when the composition is changed and can be in the range of about 40 to about 65.

For the compositions of EXAMPLES 5 to 7, below, the hot fusing characteristic appears at an isocyanate index of about 55 with no melting occurring at an isocyanate index not less than about 60. At an isocyanate index of about 50 the polyurethane drips through holes or drips from proper positions.

The following Examples are given by way of illustration and not by way of illustration.

EXAMPLE 1: VIBRATION DAMPING MATERIAL

Vibration damping material was prepared by mixing 40 weight parts of dicyclopentadiene resin [an alicyclic resin having 5 carbon atoms, a number average molecular weight of 380, an OH value of 220 milligrams potassium hydroxide per gram (mg KOH/g) and a softening point of 100°C.] and 60 weight parts of polypropylene glycol (a polyoxyalkylene glycol having primary OH end groups, 2 functional groups and an OH value of 111 mg KOH/g) mixed in liquid form at 120°C. The resulting liquid mixture had a viscosity of 7,400 centipoise (cps) at 25°C and 1,200 cps at 60°C.

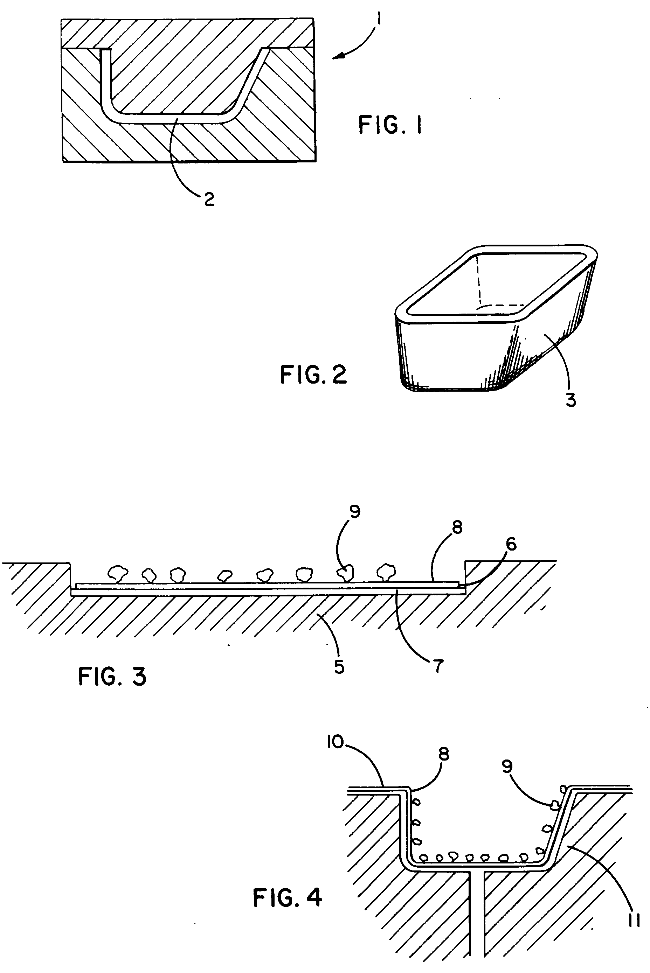

The mixture was then mixed with 37.3 weight parts of polyphenylene polymethylisocyanate having 2.7 functional isocyanate groups per isocyanate molecule, a NCO% of 31% and a viscosity of 200 cps at 25°C., 0.72 weight parts of triethylenediamine as a catalyst and 0.72 weight parts of dimethylpolysiloxane as a compatibility agent to produce a composition. Mixing was done at 60°C. Immediately thereafter, the composition was poured into a mold 1 (FIGURE 1) having a cavity 2. The temperature of the mold 1 at the time of pouring was about 23°C. After a time period of 5 minutes, a polyurethane molding 3 (FIGURE 2) for damping vibration was removed from the mold 1. The specific weight of the molding was 1.1.

Thus. a freely shaped molding can be obtained in several minutes without requiring a large amount of energy. The resulting molding can have a complicated, custom made shape which permits it to be utilized to damp vibrations of equipment having complicated shapes.

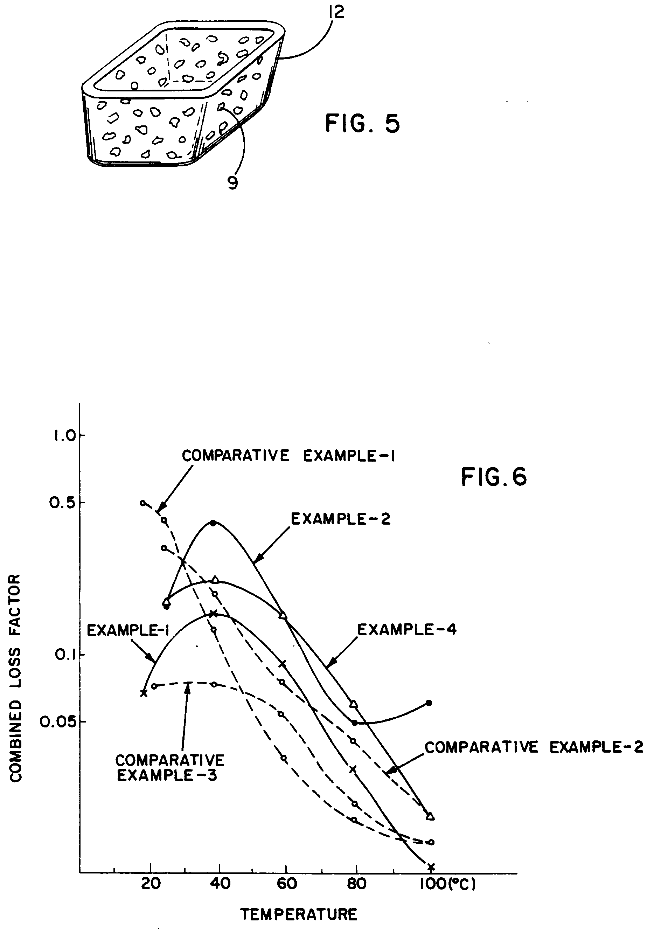

A 200 mm x 10 mm x 4 mm strip was cut from the molding 3 and bonded to a 220 mm x 10 mm x 0.8 mm SPCC cold rolled steel sheet using a adhesive to produce a non-restriction type vibration damping member. The loss factor of the member was measured in accordance with the method similar to JASO-M306 and M329. The measurement temperature was set to room temperature (about 25°C), 40°C, 60°C, 80°C and 100°C. FIGURE 6 shows the test results for the member of EXAMPLES 1, 2 and 4 (which are discussed below) and COMPARATIVE EXAMPLES 1, 2 and 3 (which are discussed below).

EXAMPLE 2: MOLDING INCLUDING SOLID FILLER

As shown in FIGURE 3, a mold 5 having a 200 mm x 200 mm x 3 mm cavity 7 was prepared by adhering a 190 mm x 190 mm piece of double coated adhesive tape 6 in the cavity. The tape 6 was on the inner bottom surface of the cavity 7 with an adhesive layer 8 facing upward. Then, 104 grams (g) of granulated calcium carbonate as solid filler 9 with a grain size of about 3 mm was scattered onto the adhesive layer 8. The composition of EXAMPLE 1 was prepared and 193 g were poured into the mold 5 whose temperature was 23°C. The pouring pressure was about atmospheric pressure. A polyurethane molding having the granulated calcium carbonate almost uniformly disbursed in the molding was removed from the mold 5 after five minutes. The molding had a specific weight of 1.4 and the filler made up about 35 weight percent of the molding.

As in EXAMPLE 1, strips were cut from the molding, one strip was secured to a steel plate and the loss factor was measured. FIGURE 6 shows that the molding of EXAMPLE 2 exhibited a higher damping vibration capability than the COMPARATIVE EXAMPLES 1,2 and 3 at temperatures greater than about 30°C.

EXAMPLE 3: MOLDING PRODUCED USING A SHEET OF POLYETHYLENE HAVING AN ADHESIVE LAYER

FIGURE 4 shows a polyethylene sheet 10 having an adhesive layer 8 on one side. The sheet 10 was brought into close contact with a cavity surface 11 of a mold by vacuum shaping at an elevated temperature such that the adhesive layer 8 faced upward. Then, 104 g of granulated calcium carbonate solid filler 9 was scattered onto the sheet 10. The composition of EXAMPLE 1 was prepared and 90 g were poured into the mold whose temperature was 23°C. The pouring pressure was about atmospheric pressure. A polyurethane molding 12 (FIGURE 5) was removed after five minutes. The calcium carbonate was uniformly distributed throughout the molding.

The damping vibration capability, as determined by the test procedure of EXAMPLE 1, was comparable to that of the molding of EXAMPLE 2.

EXAMPLE 4: POLYURETHANE MOLDING CONTAINING GLASS FIBERS

A molding was made using the composition of EXAMPLE 1 to which was added glass fibers pulverised into a size of about 3 mm as a solid filler and a mold having a 200 mm x 200 mm x 3 mm cavity. Molding was accomplished using a RRIM process that is conventionally utilized for making automobile bumpers. The composition had 42 g of filler added to it and the filler constituted about 18 weight percent of the total weight of the composition and filler. The specific weight of the molding was 1.1.

The loss factor was determined in accordance with the test procedure described in EXAMPLE 1. The test results are shown graphically in FIGURE 6.

COMPARATIVE EXAMPLE 1: POLYVINYL CHLORIDE AND ACRYLIC RUBBER VIBRATION DAMPING MATERIAL

A 3 mm thick sheet of vibration damping material that included polyvinyl chloride and acrylic rubber was utilized as a comparison. The specific weight of the material was 1.8.

The loss factor was determined in accordance with the test procedure described in EXAMPLE 1. The test results, as graphically illustrated in FIGURE 6, show a significant decrease in loss factor as the temperature increases which is undesirable.

COMPARATIVE EXAMPLE 2: MATERIAL CONTAINING MICA

A 3 mm thick sheet of vibration damping material similar to that of COMPARATIVE EXAMPLE 1 but including oriented mica was used as a comparison. The specific weight of the material was 1.7.

The loss factor was determined in accordance with the test procedure described in EXAMPLE 1. The test results, as graphically illustrated in FIGURE 6, show a significant decrease in loss factor as the temperature increases which is undesirable.

Limitations in formability exist because many pieces of the mica are oriented to increase damping vibration capability.

COMPARATIVE EXAMPLE 3: EPOXY RESIN DAMPING MATERIAL CONTAINING GLASS FIBERS

A 3mm thick sheet of epoxy resin filled with a very small amount of glass fibers was produced as a vibration damping material. The specific weight of the material was 1.1.

The loss factor was determined in accordance with the test procedure described in EXAMPLE 1. The test results, as illustrated graphically in FIGURE 6, show that the loss factor starts low and decreases which is undesirable.

COMPARATIVE EXAMPLE 4: VIBRATION DAMPING MATERIAL PRODUCED WITHOUT PREMIXING THE ALICYCLIC RESIN

The following components of the composition disclosed in EXAMPLE 1 were mixed in a suitable container: propylene glycol; isocyanate; catalyst; and compatibility agent. The alicyclic resin was introduced into a mold having a 200 mm x 200 mm x 3 mm cavity. The mixture of the remaining components was introduced into the cavity containing the alicyclic resin. The temperature of the alicyclic resin and the remaining components at pouring was 23°C. A molding was removed from the mold after five minutes.

The loss factor was determined in accordance with the test procedure described in EXAMPLE 1.

The loss factor was about 0.01 in the range of 20° to 100°C with a capacity of damping vibrations far inferior to that of the molding of EXAMPLE 1. This shows the desirability of mixing the alicyclic resin with the propylene glycol (the isocyanate reactive component) prior to introduction into the mold.

The polyurethane molding quickly hardens without using a large amount of catalyst thus increasing the molding speed and exhibits remarkably improved damping vibration capability. It is presently believed that these results are achieved because the reaction between the isocyanate reactive component and the isocyanate readily occurs and the alicyclic resin has functional groups that produce a telecheric polymer. The solid filler, when used, is uniformly distributed in the molding because the filler is dispersed and fixed onto the mold cavity surface before the composition is introduced into the cavity. This provides a vibration damping molding having an improved capability of damping vibration.

EXAMPLE 5: POLYURETHANE MOLDING PRODUCED USING AN ISOCYANATE INDEX OF 60

In a suitable vessel, 40 weight parts of dicyclopentadiene resin and 55 weight parts of polypropylene glycol, both of which are described in EXAMPLE 1, and 5 weight parts of ethylene glycol as a low molecular weight polyol were mixed at a temperature of 120°C. The temperature of the mixture was then reduced to a temperature of 60°C.

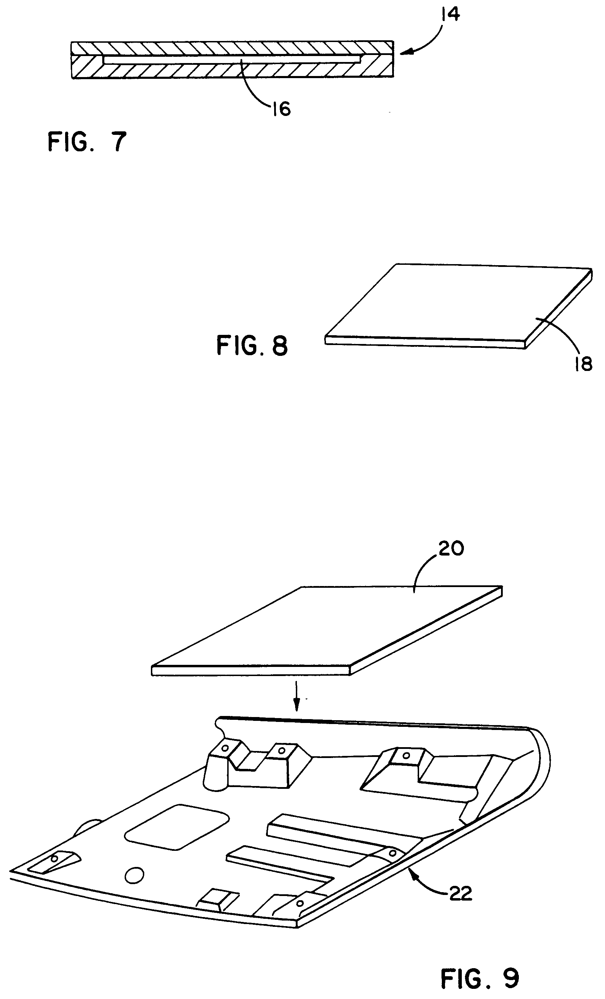

The mature was then mixed with 34.7 weight parts of polyphenylene polymethylisocyanate, which is described in EXAMPLE 1, and 33.7 weight parts of glass fibers as an inorganic filler prior to mixing therewith a solution of 1 weight part of triethylenediamine and 1 weight part of dimethylpolysiloxane to produce the composition. Then, the composition was poured into a mold 14 (FIGURE 7) having a 200 mm x 200 mm x 4 mm cavity 16. Prior to introducing the composition into the cavity 16, 61 g of granulated calcium carbonate having a grain size of about 1 mm in diameter, had been scattered on the cavity surface and held there using an adhesive. The temperature of the mold was 24°C to 26°C. prior to adding the composition. After ten minutes with the mold 14 exposed to room temperature, a flat sheet of polyurethane molding 18 (FIGURE 8) for damping vibrations was removed from the mold 14.

A 200 mm x 10 mm x 4 mm strip was cut from the molding 18 and hot fused to a 200 mm x 10 mm x 0.8 mm SPCC cold-rolled steel sheet at a temperature of 150°C for a time period of 30 minutes to produce a non-restriction type vibration damping member.

The combined loss factor of the member was measured in accordance with a method similar to JASO-M306 and 329. The measurement temperatures were 20°, 30°, 40°, 50°, 60°, 80° and 100°C.

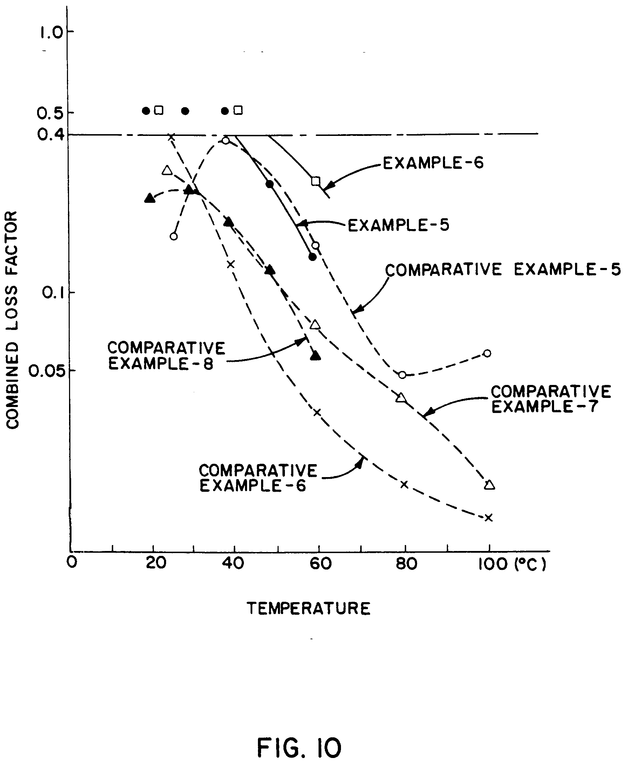

The test results, as graphically illustrated in FIGURE 10, show the superiority of the non-restriction type vibration damping member of EXAMPLE 5 as compared to the non-restriction type damping members of COMPARATIVE EXAMPLES 5, 6, 7 and 8, which are discussed in more detail below.

Particularly, good damping vibration capability was exhibited for the loss factor in the range of 20° to 40°C. which is near room temperature. Although the resonation peak was too flat at the loss factor above 0.4 to determine a half-value width at the height of 3 db and no measurement could be made, such a high level of capability had never been previously achieved with conventional, non-restriction vibration damping members.

The composition was then used to separately fabricate molding sample 20 (FIGURE 9) which had a specific weight of 1.5 and was 200 mm x 200 mm x 4 mm in size. The sample 20 was placed over a steel sheet 22 having irregularities. The sample 20 and steel sheet 22 were exposed to a temperature of 120°C for a time period of 10 minutes to determine whether heat and gravity would cause the sample 20 to conform to the irregular surface. Under these conditions, the sample 20 did not hot fuse because there was no melting. Thus, the material of this example provided superior vibration damping but was not suitable for applications where hot fusing is desired.

TABLE I, below, is a compilation of whether or not fusing occurred using the materials of EXAMPLES 5 to 7 and COMPARATIVE EXAMPLES 5 to 8, which are discussed below.

# TABLE I

## HOT FUSING TEST RESULTS

|  | 5 | 6 | 7 | 5 | 6 | 7 | 8 |
|---|---|---|---|---|---|---|---|
| Isocyanate index | 60 | 55 | 50 | 100 | - | - | - |
| Thickness (mm) | 4.0 | 4.0 | 4.0 | 4.0 | 4.0 | 3.0 | 4.0 |
| Specific weight | 1.5 | 1.5 | 1.5 | 1.5 | 1.8 | 1.7 | 1.5 |
| Fusing by heat and gravity | No | Yes | No | No | No | No | No |

EXAMPLE 6: POLYURETHANE MOLDING PRODUCED USING AN ISOCYANATE INDEX OF 55

A composition similar to that of EXAMPLE 5 was prepared but the alicyclic resin, polypropylene glycol and polyphenylene polymethylisocyanate were used in amounts to provide an isocyanate index of 55. The resulting composition was poured into the mold 14 of FIGURE 7, that is described in EXAMPLE 5, to produce a polyurethane molding.

The combined loss factor was measured in accordance with the procedure described in EXAMPLE 5.

As shown in FIGURE 10, the test results for the polyurethane molding of this example show its superiority to materials made in accordance with COMPARATIVE EXAMPLES 5, 6, 7 and 8, which are described below. Good damping vibration capability was exhibited and the loss factor could not be measured at near room temperature. Such a high level of capability had never been achieved with any conventional non-restriction vibration damping member.

In accordance with the test procedure described in EXAMPLE 5, it was determined that the material of this example was capable of hot fusing.

EXAMPLE 7: POLYURETHANE MOLDING PRODUCED USING AN ISOCYANATE INDEX OF 50

A composition similar to that of EXAMPLE 5 was prepared but the alicyclic resin, polypropylene glycol and polyphenylene polymethylisocyanate were used in amounts to provide an isocyanate index of 50. The resulting composition was poured into the mold 14 of FIGURE 7 to produce a polyurethane molding.

In accordance with the test procedure described in EXAMPLE 5, it was determined that the material of this example was excessively hot fused so that it was not applicable.

COMPARATIVE EXAMPLE 5: POLYURETHANE MOLDING PRODUCED USING AN ISOCYANATE INDEX OF 100

A composition similar to that of EXAMPLE 5 was prepared but the alicyclic resin, polypropylene glycol and polyphenylene polymethylisocyanate were used in amounts to provide an isocyanate index of 100. The resulting composition was poured into the mold 14 of FIGURE 7 that is described in EXAMPLE 5 to produce a polyurethane molding.

The combined loss factor and the hot fusing characteristic were determined in accordance with the procedures disclosed in EXAMPLE 5. The results, as shown in FIGURE 10 and TABLE I, indicate good damping but there was no hot fusing.

COMPARATIVE EXAMPLE 6: MATERIAL MADE USING POLYVINYL CHLORIDE AND ACRYLIC RUBBER

A sheet of vibration damping material having a thickness of 4 mm and a specific gravity of 1.8 was conventionally made using polyvinyl chloride and acrylic rubber.

The combined loss factor and the hot fusing characteristic were determined in accordance with the test procedures disclosed in EXAMPLE 5. The results, as shown in FIGURE 10 and TABLE I, indicate poor damping and that there was no hot fusing.

COMPARATIVE EXAMPLE 7: MATERIAL CONTAINING MICA

A 3 mm thick sheet of vibration damping material similar to that of COMPARATIVE EXAMPLE 5 but including oriented mica was used as a test comparison. The specific weight of the material was 1.7.

The combined loss factor and the hot fusing characteristic were determined in accordance with the test procedures described in EXAMPLE 5. The results, as shown in FIGURE 10 and TABLE I, indicate poor damping and that there was hot fusing.

Limitations in formability exist because many pieces of the mica are oriented to increase damping vibration capability.

COMPARATIVE EXAMPLE 8: MATERIAL CONTAINING ASPHALT

A sheet of vibration damping material 4 mm thick and having a specific gravity of 1.5 was conventionally made using asphalt.

The combined loss factor and the hot fusing characteristic were determined in accordance with the test procedures described in EXAMPLE 5. The results, as shown in FIGURE 10 and TABLE I, indicate poor damping and that there was no hot fusing.

EXAMPLE 8: POLYURETHANE MOLDING PRODUCED USING AN ISOCYANATE INDEX OF 70

At a temperature of 120°C., 40 weight parts of the dicyclopentadiene resin with 60 weight parts of polyether polyol having 3 functional groups and a OH value of 285 mg KOH/g were mixed. The first mixture was then cooled to a temperature of 60°C. The first mixture was then mixed, at room temperature, with 43.8 weight parts of the polyphenylene polymethylisocyanate of EXAMPLE 5 and 25 weight parts of glass fibers prior to mixing thereto 0.4 weight parts of triethylene diamine as a catalyst and 0.4 weight parts of dimethylpolysiloxane as a compatibility agent to produce a composition. The isocyanate index was 70. Prior to introducing the composition into the mold cavity 16 (FIGURE 7) 2, 61 g of granulated calcium carbonate having a grain sire of about 1 mm in diameter had been scattered on the cavity surface and held there using an adhesive. A flat polyurethane molding sheet 18 (FIGURE 8) for damping vibration was obtained.

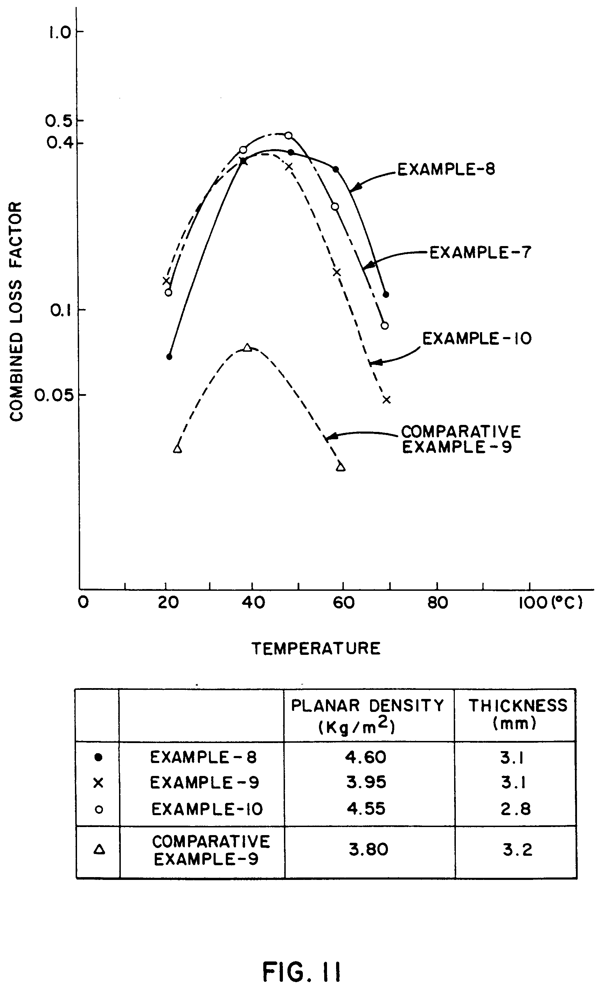

The combined loss factor was measured in accordance with the test procedure described in EXAMPLE 5. The test results, as graphically illustrated in FIGURE 11, show the superiority of the polyurethane molding of this example as compared to that of COMPARATIVE EXAMPLE 9, which is discussed below. The high level of capability had never been achieved with any convention non-restriction type vibration damping members before.

EXAMPLE 9: USE OF RESIN HAVING NO TERMINAL OHs

A composition similar to that of EXAMPLE 8 was prepared by replacing 20 weight parts of the dicyclopentadiene resin with dicyclopentadiene [having a number average molecular weight of 420, a saponification value of 175 mgKOH/g], a resin having carbonyl groups but no OHs at the ends. The isocyanate index was maintained at 70. A polyurethane molding was produced in accordance with the procedure described in EXAMPLE 8.

The combined loss factor was measured by the test procedure described in EXAMPLE 8. The test results show that the molding of this example is superior to the material of COMPARATIVE EXAMPLE 9, discussed below, as is shown in FIGURE 11. The high level of capability had never been achieved with any convention non-restriction type vibration damping members before.

EXAMPLE 10: USE OF ANOTHER ALICYCLIC RESIN

A composition similar to that of EXAMPLE 8 was prepared but 20 weight parts of the dicyclopentadiene resin was replaced with coumarone-indene resin which is an alicyclic resin having 9 carbon atoms, a number average molecular weight of 640 and no functional end groups. The isocyanate index was maintained at 70. A polyurethane molding was produced in accordance with the procedure disclosed in EXAMPLE 8.

The combined loss factor was measured by the test procedure described in EXAMPLE 8. The results show that the molding of this example is superior to the material of COMPARATIVE EXAMPLE 9, discussed below, as is shown in FIGURE 11. The high level of capability had never been achieved with any convention non-restriction type vibration damping members before.

COMPARATIVE EXAMPLE 9: CONVENTIONAL POLYURETHANE

A conventional polyurethane that is used in automobile bumpers was tested. This polyurethane was produced by mixing 100 weight parts of polyether polyol, 20 weight parts of ethylene glycol as the polyol of low molecular weight, 5 weight parts of diaminodiphenylmethane as the aromatic amine and 125.4 weight parts of liquid diphenylmethane diisocyanate (MDI) having an NCO% of 24%. The isocyanate index was 100. The resulting composition was made into a polyurethane molding by the method disclosed in EXAMPLE 8.

No alicyclic resin was utilized.

The combined loss factor was determined in accordance with the test procedure described in EXAMPLE 8. The test results are shown in FIGURE 11.

EXAMPLE 11: POLYURETHANE HAVING AN ISOCYANATE INDEX OF 62 WITHOUT FILLER

A composition similar to that of EXAMPLE 8 was used but the alicyclic resin, polyol and isocyanate were used in amounts to achieve an isocyanate index of 62. A polyurethane molding was then produced by introducing the composition into the mold cavity discussed in EXAMPLE 8, but without the calcium carbonate.

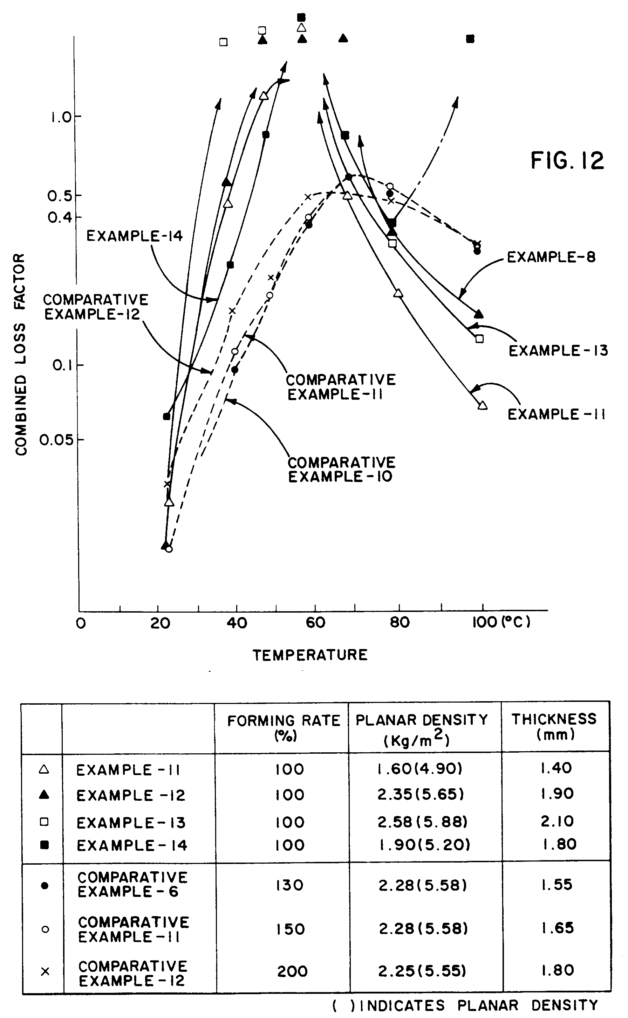

The combined loss factor was determined by bonding a strip to the steel sheet as described in EXAMPLE 8 and further bonding to the strip a 220 mm x 10 mm x 0.4 mm thick SPCC cold-rolled steel sheet. A restriction type member having a sandwich structure was produced. The results of the combined loss factor test are disclosed in FIGURE 12.

EXAMPLE 12: POLYURETHANE HAVING AN ISOCYANATE INDEX OF 62 WITH FILLER

A composition identical to that of EXAMPLE 11 was produced. A polyurethane molding was then produced by introducing the composition into the mold cavity discussed in EXAMPLE 8, including the calcium carbonate.

The combined loss factor was measured in accordance with the test procedure disclosed in EXAMPLE 11. The test results are shown in FIGURE 12.

EXAMPLE 13: POLYURETHANE HAVING AN ISOCYANATE INDEX OF 80 WITHOUT FILLER

A composition similar to that of EXAMPLE 11 was produced but the isocyanate index was 80. A polyurethane molding was then produced by introducing the composition into the mold cavity discussed in EXAMPLE 8, but without the calcium carbonate.

The combined loss factor was measured in accordance with the test procedure disclosed in EXAMPLE 11 . The test results are shown in FIGURE 12.

EXAMPLE 14: POLYURETHANE HAVING AN ISOCYANATE INDEX OF 80 WITH A FILLER

A composition similar to that of EXAMPLE 11 was produced but the isocyanate index was 80. A polyurethane molding was then produced by introducing the composition into the mold cavity discussed in EXAMPLE 8, including the calcium carbonate.

The combined loss factor was measured in accordance with the test procedure disclosed in EXAMPLE 11. The test results are shown in FIGURE 12.

COMPARATIVE EXAMPLE 10: CONVENTIONAL MATERIAL INCLUDING ASPHALT HAVING A 130% FOAM RATE

A sheet of vibration damping material having a foam rate of 130% (due to the temperature, foaming did not occur), a thickness of 1.65 mm and a specific gravity of 1.47 was made using foam asphalt.

The combined loss factor was measured in accordance with the procedure disclosed in EXAMPLE 11. The test results are shown in FIGURE 12.

COMPARATIVE EXAMPLE 11: CONVENTIONAL MATERIAL INCLUDING ASPHALT HAVING A 150% FOAM RATE

A sheet of vibration damping material having a foam rate of 150%, a thickness of 1.55 mm and a specific gravity of 1.47 was made using foam asphalt.

The combined loss factor was measured in accordance with the procedure disclosed in EXAMPLE 11. The test results are shown in FIGURE 12.

COMPARATIVE EXAMPLE 12: CONVENTIONAL MATERIAL INCLUDING ASPHALT HAVING A 200% FOAM RATE

A sheet of vibration damping material having a foam rate of 200%, a thickness of 1.80 mm and a specific gravity of 1.25 was made using foam asphalt.

The combined loss factor was measured in accordance with the procedure disclosed in EXAMPLE 11. The test results are shown in FIGURE 12.

The polyurethane molding for damping vibration is obtained by a polyaddition reaction between an isocyanate group and isocyanate reactive component. The polyaddition reaction is adjusted by shifting the isocyanate index to such a point that the polyurethane molding exhibits a desired semi-molten resin characteristic at a desired hot fusing temperature. The polyurethane molding has a high capability of damping vibration than any conventional non-restriction type vibration damping members, and can be fused by heat and gravity isomorphically to a surface, such as an automobile floor, with irregularities.

This invention has been described in terms of specific embodiments set forth in detail. It should be understood, however, that these embodiments are presented by way of illustration only, and that the invention is not necessarily limited thereto. Modifications and variations within the spirit and scope of the claims that follow will be readily apparent from this disclosure, as those skilled in the art will appreciate.

**Claims**

1. A composition suitable for use in making vibration damping material, the composition comprising:
   comprising an alicyclic resin having about 5 to about 9 carbon atoms;
   an isocyanate reactive component; and
   an isocyanate, the vibration damping material having semi-molten resin characertistics at a hot fusing temperature.

2. The composition in accordance with claim 1 wherein the alicyclic resin is a telecheric polymer.

3. The composition in accordance with claim 1 wherein the alicyclic resin has at least one polar group.

4. The composition in accordance with claim 1 wherein the alicyclic resin has at least one group selected from the group of carbonyl, OH-, $NH_2$- and NH- groups.

5. The composition in accordance with claim 1 wherein the isocyanate reactive component is a palyoxyalkylene glycol.

6. The composition in accordance with claim 1 wherein the isocyanate is an aromatic isocyanate.

7. The composition in accordance with claim 1 wherein the isocyanate has at least two isocyanate groups.

8. The composition in accordance with claim 1 wherein vibration damping material made therefrom exhibits semi-molten resin characteristics at a hot fusing temperature.

9. The composition in according to claim 1 wherein vibration damping material made therefrom can be hot fused.

10. A vibration damping material made from the composition of claim 1.

11. The composition in accordance with claim 1 wherein the isocyanate index is in a range of about 40 to about 65.

12. The composition in accordance with claim 1 wherein the vibration damping matrial is a polyurethane and the isocyanate index is adjusted to such a point that the polyurethane exhibits the semi-molten resin characteristics.

13. A vibration damping member comprises the vibration damping material in accordance with claim 1, wherein the vibration damping material has semi-molten resin characteristics at a hot fusing temperature higher than room temperature.

14. A composition suitable for use in making vibration damping material, the composition comprising:
    an alicyclic resin having about 5 to about 9 carbon atoms, the alicyclic resin being a telecheric polymer;
    a polyoxyalkylene glycol having 2 to about 6 carbon atoms in the alkylene group; and
    an isocyanate having at least two isocyanate groups, the vibration damping material having semi-molten resin characteristics at a hot fusing temperature.

15. A method of making a polyurethane suitable for use as a vibration damping material, the polyurethane being capable of being produced in a mold having a mold cavity and mold cavity surface, the method comprising the steps of:
    (a) mixing a composition comprising an alicyclic resin having about 5 to about 9 carbon atoms, a polyoxyalkylene glycol and an isocyanate; and then
    (b) introducing the composition into the cavity, the vibration damping material having semi-molten resin characterisitics at a hot fusing temperature.

16. The method in accordance with claim 15 further comprising the step of applying a filler to the mold cavity surface, the applying step occurring before the introducing step.

17. The method in accordance with claim 16 further comprising the step of applying an adhesive to the mold cavity surface prior to the filler applying step with the adhesive adhering the filler to the surface.

18. A vibration damping material made in accordance with the method of claim 15.

FIG. 1

FIG. 2

FIG. 3

FIG. 4

FIG. 5

FIG. 6

COMPARATIVE EXAMPLE-1

EXAMPLE-2

EXAMPLE-1

EXAMPLE-4

COMPARATIVE EXAMPLE-3

COMPARATIVE EXAMPLE-2

COMBINED LOSS FACTOR

TEMPERATURE

20    40    60    80    100(°C)

16

FIG. 7

FIG. 8

FIG. 9

FIG. 10

FIG. 11

| | | PLANAR DENSITY (Kg/m²) | THICKNESS (mm) |
|---|---|---|---|
| ● | EXAMPLE-8 | 4.60 | 3.1 |
| × | EXAMPLE-9 | 3.95 | 3.1 |
| ○ | EXAMPLE-10 | 4.55 | 2.8 |
| △ | COMPARATIVE EXAMPLE-9 | 3.80 | 3.2 |

FIG. 12

| | | FORMING RATE (%) | PLANAR DENSITY (Kg/m$^2$) | THICKNESS (mm) |
|---|---|---|---|---|
| △ | EXAMPLE-11 | 100 | 1.60(4.90) | 1.40 |
| ▲ | EXAMPLE-12 | 100 | 2.35(5.65) | 1.90 |
| □ | EXAMPLE-13 | 100 | 2.58(5.88) | 2.10 |
| ■ | EXAMPLE-14 | 100 | 1.90(5.20) | 1.80 |
| ● | COMPARATIVE EXAMPLE-6 | 130 | 2.28(5.58) | 1.55 |
| ○ | COMPARATIVE EXAMPLE-11 | 150 | 2.28(5.58) | 1.65 |
| × | COMPARATIVE EXAMPLE-12 | 200 | 2.25(5.55) | 1.80 |

( )INDICATES PLANAR DENSITY

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DATABASE WPI Section Ch, Week 8652, Derwent Publications Ltd., London, GB; AN 86-343827 & JP-A-61 258 743 (NIPPON STEEL CORP. ET AL.) 17 November 1986 * abstract * | 1,5-7,14 | C08G18/40 C08G18/76 C08L75/04 |
| A | DATABASE WPI Section Ch, Week 9235, Derwent Publications Ltd., London, GB; AN 92-289046 & JP-A-4 198 315 (KAWASAKI STEEL CORP.) 17 July 1992 * abstract * | 1-7,14 | |
| A | CHEMICAL ABSTRACTS, vol. 108, no. 6 Columbus, Ohio, US; abstract no. 38972e, * abstract * & JP-A-62 079 217 (ACHILLES CORP.) 11 April 1987 | 1 | TECHNICAL FIELDS SEARCHED (Int. Cl.5 ) |
| A | US-A-5 091 455 (N. E. BLANK ET AL.)  * claims * | 1,5-7, 12,14 | C08G C08L |
| A | DATABASE WPI Section Ch, Week 9002, Derwent Publications Ltd., London, GB; AN 90-10893 & JP-A-1 290 404 (HONDA MOTOR IND. ET AL.) 22 November 1989 * abstract * | 1,15 | |

The present search report has been drawn up for all claims

| Place of search | Date of completion of the search | Examiner |
|---|---|---|
| BERLIN | 22 DECEMBER 1993 | HOEPFNER W. |